# FASCICULE DE BREVET EUROPEEN

(11) **EP 2 946 964 B1**
(45) Date de publication et mention de la délivrance du brevet: **16.11.2016**
(21) Numéro de dépôt: 15164558.7
(22) Date de dépôt: 21.04.2015
(51) Int. Cl.: B60K 26/02, B60W 50/16, G05G 1/30

(54) **DISPOSITIF DE COMMANDE DE L'ACCÉLÉRATION D'UN VÉHICULE, À AMORTISSEMENT VARIABLE POUR ALERTER LE CONDUCTEUR D'UNE PHASE DE ROUE LIBRE**
STEUERVORRICHTUNG ZUR BESCHLEUNIGUNG EINES FAHRZEUGS MIT VARIABLER DÄMPFUNG ZUR WARNUNG DES FAHRERS VOR EINER PHASE MIT DURCHDREHENDEM RAD
DEVICE FOR CONTROLLING THE ACCELERATION OF A VEHICLE, WITH VARIABLE DAMPING TO ALERT THE DRIVER OF A FREE-WHEELING PHASE

(30) Priorité: 20.05.2014 FR 1454481
(43) Date de publication de la demande: 25.11.2015
(73) Titulaire: PEUGEOT CITROËN AUTOMOBILES SA, 78140 Vélizy-Villacoublay (FR)
(72) Inventeur: Gaudichon, Ludovic, 78210 St Cyr l'Ecole (FR)

(56) Documents cités:
- EP-A1- 0 899 147
- WO-A1-2013/112075
- DE-A1-102004 027 499

## Description

L'invention concerne les dispositifs qui sont destinés à commander l'accélération d'un véhicule, et plus précisément ceux qui comprennent une pédale d'accélérateur.

De nombreux véhicules, éventuellement de type automobile, comprennent une pédale d'accélérateur qui, lorsqu'elle est actionnée par un pied d'un conducteur, permet de commander leur accélération. L'angle de rotation de la pédale d'accélérateur et la vitesse en cours sont utilisés par un calculateur du véhicule pour déterminer le couple qui doit être transmis aux roues de ce dernier.

Comme le sait l'homme de l'art, dans certaines situations de vie d'un véhicule, comme par exemple dans une descente, il peut s'avérer inutile de transmettre du couple à ses roues. Le véhicule peut alors fonctionner en roue libre, soit avec son moteur allumé (mode dit « coasting »), soit avec son moteur temporairement coupé (mode dit « sailing »), ce qui permet avantageusement de réduire la consommation d'énergie et/ou de stocker de l'énergie sous forme électrique.

Afin d'alerter le conducteur du fait que son véhicule se trouve dans une phase de roue libre (coasting ou sailing), il a été proposé d'adjoindre à la pédale d'accélérateur un système haptique (et plus précisément à retour d'effort). Ainsi, on peut faire vibrer une pédale d'accélérateur chaque fois qu'une phase de roue libre peut être réalisée. Cette solution s'avère complexe et onéreuse.

Il a également été proposé de coupler la pédale d'accélérateur à un ressort induisant une raideur non linéaire (et donc variable). Cependant, cette solution ne permet pas au conducteur d'identifier correctement une phase de roue libre potentielle lorsqu'il relâche la pression exercée sur la pédale d'accélérateur. En outre, cette solution ne tient pas compte de la vitesse d'enfoncement ou de relâchement de la pédale d'accélérateur, et donc peut nécessiter que le conducteur effectue plusieurs « pompages » (suite d'enfoncements et de relâchements) pour déterminer l'intervalle de positions angulaires de la pédale d'accélérateur correspondant à une phase de roue libre.

Un dispositif selon le préambule de la revendication 1 est connu du document WO 2013/112075 A1.

L'invention a donc notamment pour but d'améliorer la situation.

Elle propose notamment à cet effet un dispositif, destiné à commander l'accélération d'un véhicule, et comprenant une pédale d'accélérateur, destinée à être montée à rotation dans le véhicule, et des moyens d'amortissement, d'une part, solidarisés à une partie intermédiaire de la pédale d'accélérateur et destinés à être solidarisés au véhicule, et, d'autre part, agencés pour présenter un coefficient de raideur plus important dans une zone correspondant à des positions angulaires intermédiaires de la pédale d'accélérateur qui appartiennent à un intervalle ayant un écart prédéfini entre ses valeurs minimale et maximale, de sorte que le conducteur du véhicule ressente avec son pied, qui actionne la pédale d'accélérateur, quand cette dernière est dans la zone.

Ainsi, lorsque cette zone correspond à une situation de vie du véhicule dans laquelle il peut fonctionner en roue libre, le conducteur de ce véhicule peut en être instantanément prévenu par les brusques variations d'effort qu'il doit exercer sur la pédale d'accélérateur avec son pied, ce qui est de nature à réduire sensiblement la consommation d'énergie du véhicule.

Le dispositif de commande selon l'invention peut comporter d'autres caractéristiques qui peuvent être prises séparément ou en combinaison, et notamment :
- ses moyens d'amortissement peuvent être agencés pour présenter dans la zone un coefficient de raideur qui varie en fonction d'une vitesse d'enfoncement de la pédale d'accélérateur ou de relâchement d'une pression exercée sur la pédale d'accélérateur ;
   ➢ le coefficient de raideur peut augmenter avec la vitesse ;
   ➢ ses moyens d'amortissement peuvent comprendre, d'une part, un cylindre comprenant des chambres amont et aval présentant des première et deuxième sections, et une chambre intermédiaire reliant ces chambres amont et aval et présentant une troisième section strictement inférieure aux première et deuxième sections, et, d'autre part, un piston solidarisé à la partie intermédiaire de la pédale d'accélérateur et propre à se translater dans les chambres amont, aval et intermédiaire ;
- ses moyens d'amortissement peuvent être agencés pour présenter dans la zone un coefficient de raideur qui varie selon que le pied enfonce la pédale d'accélérateur ou relâche une pression exercée sur la pédale d'accélérateur ;
   ➢ ses moyens d'amortissement peuvent comprendre un cylindre et un piston solidarisé à la partie intermédiaire de la pédale d'accélérateur, propre à se translater dans le cylindre, et comprenant des moyens d'action propres à induire un premier coefficient de raideur lorsque le pied enfonce la pédale d'accélérateur et un second coefficient de raideur inférieur au premier coefficient de raideur lorsque le pied relâche la pression exercée sur la pédale d'accélérateur ;
- ses moyens d'amortissement peuvent être agencés pour faire varier les valeurs minimale et maximale en fonction d'une vitesse en cours du véhicule ;
   ➢ ses moyens d'amortissement peuvent comprendre, d'une part, un cylindre et un piston solidarisé à la partie intermédiaire de la pédale d'accélérateur et propre à se translater dans le cylindre, et, d'autre part, un mécanisme à excentrique solidarisé fixement au cylindre, destiné à être solidarisé au véhicule, et propre à faire varier les valeurs minimale et maximale en fonction de la vitesse en cours du véhicule.

L'invention propose également un véhicule, éventuellement de type automobile, et comprenant un dispositif de commande du type de celui présenté ci-avant.

D'autres caractéristiques et avantages de l'invention apparaîtront à l'examen de la description détaillée ci-après, et des dessins annexés, sur lesquels:

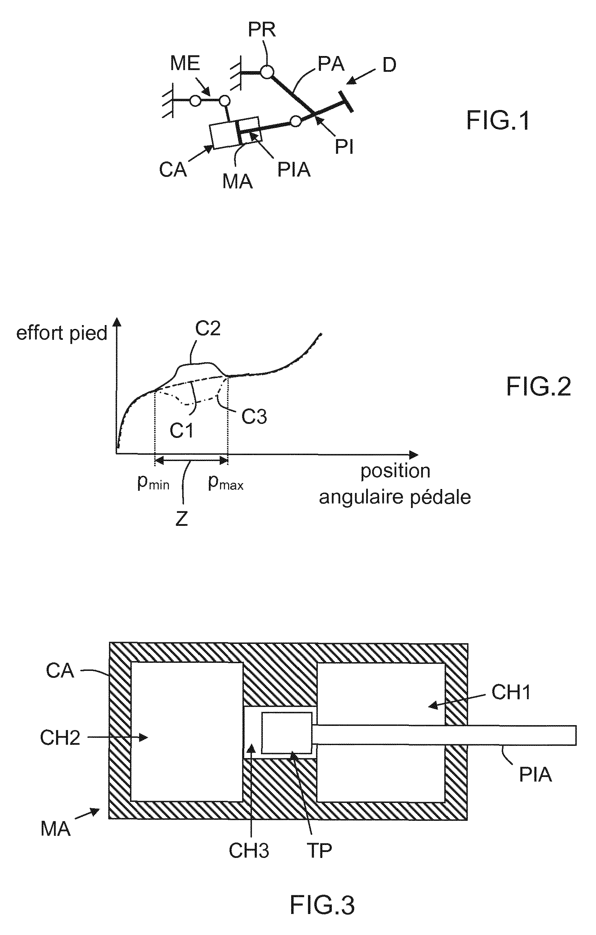

- la figure 1 illustre schématiquement un exemple de réalisation d'un dispositif de commande selon l'invention, solidarisé à une partie d'un véhicule,
- la figure 2 illustre au sein d'un diagramme des exemples de première (C1), deuxième (C2) et troisième (C3) courbes d'évolution de l'effort exercé par le pied d'un conducteur sur une pédale d'accélérateur en fonction de la position angulaire de cette dernière, dans le cas respectivement d'un enfoncement ou d'un relâchement lent, d'un enfoncement rapide, et d'un relâchement rapide,
- la figure 3 illustre schématiquement un exemple de réalisation d'un amortisseur d'un dispositif de commande selon l'invention, présentant un coefficient de raideur plus important dans la zone de roue libre Z,

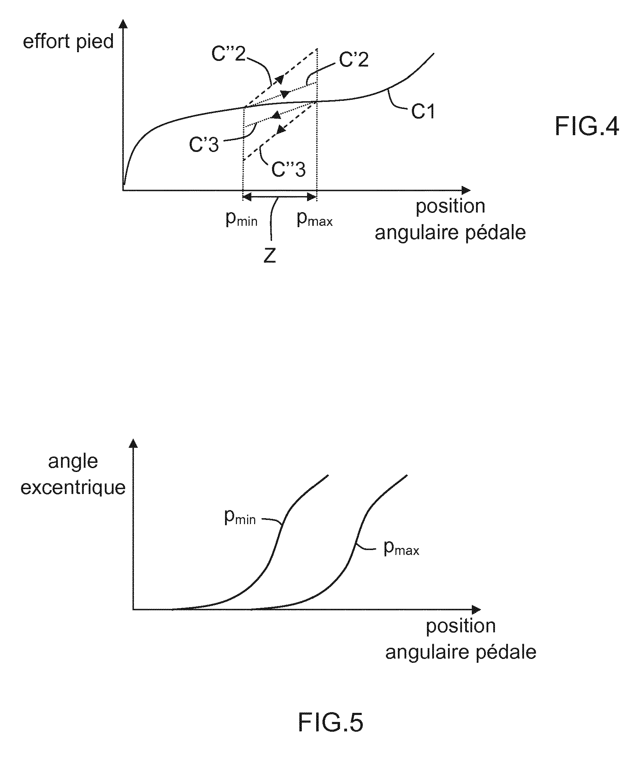

- la figure 4 illustre au sein d'un diagramme des exemples de première (C1), deuxième (C'2), troisième (C"2), quatrième (C'3) et cinquième (C"3) courbes d'évolution de l'effort exercé par le pied d'un conducteur sur une pédale d'accélérateur en fonction de la position angulaire de cette dernière, dans le cas respectivement d'un enfoncement ou d'un relâchement lent, d'un enfoncement rapide, d'un enfoncement très rapide, d'un relâchement rapide et d'un relâchement très rapide, lorsque les moyens d'amortissement présentent, dans la zone de roue libre Z, un coefficient de raideur qui varie en fonction de la vitesse d'enfoncement de la pédale d'accélérateur, et
- la figure 5 illustre au sein d'un diagramme des exemples de première (pₘᵢₙ) et seconde (pₘₐₓ) courbes d'évolution respectivement des valeurs minimale et maximale de l'intervalle correspondant à la zone de roue libre Z en fonction de l'angle d'un mécanisme à excentrique et de la position angulaire de la pédale d'accélérateur.

L'invention a notamment pour but de proposer un dispositif de commande D destiné à permettre à un conducteur de commander avec l'un de ses pieds l'accélération d'un véhicule.

Dans ce qui suit, on considère, à titre d'exemple non limitatif, que le véhicule est de type automobile. Il s'agit par exemple d'une voiture. Mais l'invention n'est pas limitée à ce type de véhicule. Elle concerne en effet tout type de véhicule dont l'accélération peut être commandée par un dispositif de commande D à pédale d'accélérateur.

Par ailleurs, on considère dans ce qui suit, à titre d'exemple non limitatif, que le véhicule comprend une chaîne de transmission de type conventionnel, c'est-à-dire ne comportant comme source de couple qu'un moteur thermique. Mais ce véhicule pourrait comprendre une chaîne de transmission de type hybride, c'est-à-dire comportant au moins un moteur thermique et au moins une machine auxiliaire capable de fournir du couple à partir de l'énergie qui est stockée dans des moyens de stockage d'énergie (comme par exemple un moteur électrique ou à air comprimé).

On a schématiquement représenté sur la figure 1 un exemple de réalisation non limitatif d'un dispositif de commande D selon l'invention, solidarisé à une partie d'un véhicule. Comme illustré, un tel dispositif de commande D comprend au moins une pédale d'accélérateur PA et des moyens d'amortissement MA.

La pédale d'accélérateur PA est destinée à être montée à rotation dans le véhicule, par exemple sur une paroi fixe et via un pivot PR, par exemple à ressort de torsion intégré. Elle est destinée à être actionnée (enfoncée ou relâchée) par l'un des pieds du conducteur du véhicule.

Les moyens d'amortissement MA sont solidarisés à une partie intermédiaire PI de la pédale d'accélérateur PA et destinés à être solidarisés au véhicule, par exemple sur une paroi fixe (éventuellement la même que celle à laquelle est solidarisée la pédale d'accélérateur PA). Ils sont agencés pour présenter un coefficient de raideur plus important dans une zone Z correspondant à des positions angulaires intermédiaires de la pédale d'accélérateur PA, qui appartiennent à un intervalle ayant un écart prédéfini EP entre ses valeurs minimale pₘᵢₙ et maximale pₘₐₓ (soit EP = pₘₐₓ - pₘᵢₙ = constante). On comprendra qu'en dehors de cet intervalle (et donc de la zone Z) le coefficient de raideur des moyens d'amortissement MA est strictement inférieur à celui qu'il présente dans cet intervalle (et donc dans la zone Z).

Ainsi, lorsque cette zone Z correspond à une situation de vie du véhicule dans laquelle il peut fonctionner en roue libre (coasting ou sailing), le conducteur de ce véhicule en est instantanément prévenu par la brusque variation d'effort qu'il doit exercer sur la pédale d'accélérateur avec son pied, ce qui est de nature à réduire sensiblement la consommation d'énergie du véhicule. Cette brusque variation d'effort est illustrée sur la figure 2.

Plus précisément, dans l'exemple non limitatif illustré sur la figure 2 :
- la première courbe C1 représente l'effort exercé par le pied du conducteur sur la pédale d'accélérateur PA en fonction de la position angulaire de cette dernière (PA), dans le cas d'un enfoncement ou d'un relâchement lent,
- la deuxième courbe C2 représente l'effort exercé par le pied du conducteur sur la pédale d'accélérateur PA en fonction de la position angulaire de cette dernière (PA), dans le cas d'un enfoncement rapide,
- et la troisième courbe C3 représente l'effort exercé par le pied du conducteur sur la pédale d'accélérateur PA en fonction de la position angulaire de cette dernière (PA), dans le cas d'un relâchement rapide.

On observe sur C2 que dès que la position angulaire de la pédale d'accélérateur PA devient strictement supérieure à la valeur minimale pₘᵢₙ de l'intervalle qui définit la zone de roue libre Z, l'effort, que doit exercer le pied pour enfoncer rapidement la pédale d'accélérateur PA, augmente subitement du fait de l'augmentation du coefficient de raideur des moyens d'amortissement MA. Puis, lorsque la position angulaire de la pédale d'accélérateur PA devient strictement supérieure à la valeur maximale pₘₐₓ de l'intervalle précité, l'effort, que doit exercer le pied pour continuer à enfoncer rapidement la pédale d'accélérateur PA, diminue subitement du fait de la diminution du coefficient de raideur des moyens d'amortissement MA.

De même, on observe sur C3 que dès que la position angulaire de la pédale d'accélérateur PA devient strictement inférieure à la valeur maximale pₘₐₓ de l'intervalle qui définit la zone de roue libre Z, l'effort, que doit exercer le pied pour relâcher rapidement la pédale d'accélérateur PA, décroit subitement du fait de l'augmentation du coefficient de raideur des moyens d'amortissement MA. Puis, lorsque la position angulaire de la pédale d'accélérateur PA devient strictement inférieure à la valeur minimale pₘᵢₙ de l'intervalle précité, l'effort, que doit exercer le pied pour continuer à relâcher rapidement la pédale d'accélérateur PA, augmente subitement du fait de la diminution du coefficient de raideur des moyens d'amortissement MA.

La courbe C1 illustre une situation avantageuse offerte par un mode de réalisation particulier et optionnel des moyens d'amortissement MA, dans lequel ils présentent dans la zone Z un coefficient de raideur qui varie en fonction de la vitesse d'enfoncement de la pédale d'accélérateur PA ou de relâchement de la pression exercée sur la pédale d'accélérateur PA. On comprendra que dans ce cas lorsque le conducteur fait varier lentement la position angulaire de la pédale d'accélérateur PA, il retrouve une loi classique effort/déplacement de cette dernière (PA), car les moyens d'amortissement MA sont agencés de sorte que leur coefficient de raideur dans la zone de roue libre Z soit très peu supérieur à celui qu'ils présentent en dehors de cette zone de roue libre Z. Cela présente un avantage indéniable, notamment lors de manoeuvres, du fait que le conducteur n'est pas perturbé par la mise en oeuvre de l'invention.

Un tel résultat peut, par exemple, être obtenu lorsque les moyens d'amortissement MA comprennent un amortisseur du type de celui illustré non limitativement sur la figure 3. Ici, comme illustré, l'amortisseur comprend un cylindre CA particulier et un piston PIA. Plus précisément, le cylindre CA comprend des chambres amont CH1 et aval CH2 qui présentent respectivement des première et deuxième sections, et une chambre intermédiaire CH3 qui relie les chambres amont CH1 et aval CH2 et qui présente une troisième section strictement inférieure aux première et deuxième sections (afin de définir une espèce de goulot d'étranglement). On notera que les volumes des chambres amont CH1 et aval CH2 ne sont pas obligatoirement identiques. Le piston PIA est destiné à être solidarisé à la partie intermédiaire PI de la pédale d'accélérateur PA et est propre à se translater dans les chambres amont CH1, aval CH2 et intermédiaire CH3.

On comprendra qu'avec un tel agencement, lorsque la tête TP du piston PIA arrive lentement dans la chambre intermédiaire CH3 (de petite section) en provenance de la chambre amont CH1 ou aval CH2, cela n'a que très peu d'influence sur sa vitesse de déplacement. En revanche, lorsque la tête TP du piston PIA arrive rapidement dans la chambre intermédiaire CH3 (de petite section) en provenance de la chambre amont CH1 ou aval CH2, elle subit quasiment instantanément une pression beaucoup plus forte qui ralentit fortement sa vitesse de déplacement (ce qui induit la brusque augmentation du coefficient de raideur). De même, lorsque la tête TP du piston PIA arrive relativement rapidement dans la chambre amont CH1 ou aval CH2 en provenance de la chambre intermédiaire CH3 (de petite section), elle subit quasiment instantanément une pression beaucoup moins forte qui augmente fortement sa vitesse de déplacement (ce qui induit la brusque diminution du coefficient de raideur).

On notera que les moyens d'amortissement MA peuvent être agencés de manière à présenter un coefficient de raideur qui augmente avec la vitesse d'enfoncement ou de relâchement de la pédale d'accélérateur PA. Ce cas optionnel est illustré non limitativement sur la figure 4.

Plus précisément, dans l'exemple non limitatif illustré sur la figure 4 :
- la première courbe C1 représente l'effort exercé par le pied du conducteur sur la pédale d'accélérateur PA en fonction de la position angulaire de cette dernière (PA), dans le cas d'un enfoncement ou d'un relâchement lent,
- la deuxième courbe C'2 représente l'effort exercé par le pied du conducteur sur la pédale d'accélérateur PA en fonction de la position angulaire de cette dernière (PA), dans le cas d'un enfoncement rapide,
- la troisième courbe C"2 représente l'effort exercé par le pied du conducteur sur la pédale d'accélérateur PA en fonction de la position angulaire de cette dernière (PA), dans le cas d'un enfoncement très rapide,
- la quatrième courbe C'3 représente l'effort exercé par le pied du conducteur sur la pédale d'accélérateur PA en fonction de la position angulaire de cette dernière (PA), dans le cas d'un relâchement rapide, et
- la cinquième courbe C"3 représente l'effort exercé par le pied du conducteur sur la pédale d'accélérateur PA en fonction de la position angulaire de cette dernière (PA), dans le cas d'un relâchement très rapide.

On observe sur C'2 que dès que la position angulaire de la pédale d'accélérateur PA devient strictement supérieure à la valeur minimale pₘᵢₙ de l'intervalle qui définit la zone de roue libre Z, l'effort, que doit exercer le pied pour enfoncer rapidement la pédale d'accélérateur PA, augmente progressivement jusqu'à une première valeur du fait de la forte augmentation progressive du coefficient de raideur des moyens d'amortissement MA. Puis, lorsque la position angulaire de la pédale d'accélérateur PA devient strictement supérieure à la valeur maximale pₘₐₓ de l'intervalle précité, l'effort, que doit exercer le pied pour continuer à enfoncer rapidement la pédale d'accélérateur PA, diminue subitement fortement du fait de la forte diminution du coefficient de raideur des moyens d'amortissement MA.

On observe sur C"2 que dès que la position angulaire de la pédale d'accélérateur PA devient strictement supérieure à la valeur minimale pₘᵢₙ de l'intervalle qui définit la zone de roue libre Z, l'effort, que doit exercer le pied pour enfoncer rapidement la pédale d'accélérateur PA, augmente progressivement jusqu'à une seconde valeur, strictement supérieure à la première valeur (voir C'2), du fait de la très forte augmentation progressive du coefficient de raideur des moyens d'amortissement MA. Puis, lorsque la position angulaire de la pédale d'accélérateur PA devient strictement supérieure à la valeur maximale pₘₐₓ de l'intervalle précité, l'effort, que doit exercer le pied pour continuer à enfoncer rapidement la pédale d'accélérateur PA, diminue subitement très fortement du fait de la très forte diminution du coefficient de raideur des moyens d'amortissement MA.

De même, on observe sur C'3 que dès que la position angulaire de la pédale d'accélérateur PA devient strictement inférieure à la valeur maximale pₘₐₓ de l'intervalle qui définit la zone de roue libre Z, l'effort, que doit exercer le pied pour relâcher rapidement la pédale d'accélérateur PA, décroit progressivement jusqu'à une première valeur du fait de la forte augmentation progressive du coefficient de raideur des moyens d'amortissement MA. Puis, lorsque la position angulaire de la pédale d'accélérateur PA devient strictement inférieure à la valeur minimale pₘᵢₙ de l'intervalle précité, l'effort, que doit exercer le pied pour continuer à relâcher rapidement la pédale d'accélérateur PA, augmente subitement fortement du fait de la forte diminution du coefficient de raideur des moyens d'amortissement MA.

On observe sur C"3 que dès que la position angulaire de la pédale d'accélérateur PA devient strictement inférieure à la valeur maximale pₘₐₓ de l'intervalle qui définit la zone de roue libre Z, l'effort, que doit exercer le pied pour relâcher rapidement la pédale d'accélérateur PA, décroit progressivement jusqu'à une seconde valeur, strictement supérieure à la première valeur (voir C'2), du fait de la très forte augmentation progressive du coefficient de raideur des moyens d'amortissement MA. Puis, lorsque la position angulaire de la pédale d'accélérateur PA devient strictement inférieure à la valeur minimale pₘᵢₙ de l'intervalle précité, l'effort, que doit exercer le pied pour continuer à relâcher rapidement la pédale d'accélérateur PA, augmente subitement très fortement du fait de la très forte diminution du coefficient de raideur des moyens d'amortissement MA.

On notera que les moyens d'amortissement MA peuvent être également et éventuellement agencés pour présenter dans la zone Z un coefficient de raideur qui varie selon que le pied du conducteur enfonce la pédale d'accélérateur PA ou relâche la pression exercée sur cette pédale d'accélérateur PA.

Pour ce faire, les moyens d'amortissement MA peuvent, par exemple, comprendre un amortisseur comportant un cylindre CA et un piston PIA particulier.

Le cylindre CA peut, par exemple, être similaire (ou identique) à celui décrit ci-avant en référence à la figure 3.

Le piston PIA est destiné à être solidarisé à la partie intermédiaire PI de la pédale d'accélérateur PA, est propre à se translater dans le cylindre CA, et comprend des moyens d'action qui sont propres à induire un premier coefficient de raideur lorsque le pied enfonce la pédale d'accélérateur PA et un second coefficient de raideur, inférieur au premier coefficient de raideur, lorsque le pied relâche la pression exercée sur la pédale d'accélérateur PA. Par exemple, ces moyens d'action peuvent se présenter sous la forme de clapets anti-retour solidarisés fixement sur la face externe de la tête TP du piston PIA.

On comprendra que lorsque la tête TP du piston PIA arrive rapidement dans la chambre intermédiaire CH3 (de petite section) en provenance de la chambre amont CH1, elle subit quasiment instantanément une première pression qui ralentit très fortement sa vitesse de déplacement (et donc induit un premier coefficient de raideur) du fait que les moyens d'action sont actifs. En revanche, lorsque la tête TP du piston PIA arrive rapidement dans la chambre intermédiaire CH3 (de petite section) en provenance de la chambre aval CH2, elle subit quasiment instantanément une seconde pression qui ne ralentit que fortement sa vitesse de déplacement (et donc induit un second coefficient de raideur) du fait qu'elle est strictement inférieure à la première pression en raison de l'inaction des moyens d'action.

On notera que les moyens d'amortissement MA peuvent être également et éventuellement agencés pour faire varier les valeurs minimale pₘᵢₙ et maximale pₘₐₓ en fonction de la vitesse en cours du véhicule. En d'autres termes, les valeurs angulaires minimale pₘᵢₙ et maximale pₘₐₓ de l'intervalle qui définit la zone de roue libre Z, ne sont pas les mêmes selon la vitesse en cours du véhicule, ce qui permet de déplacer l'intervalle et donc la zone de roue libre Z. Ce cas est schématiquement illustré sur la figure 5.

Un tel résultat peut, par exemple, être obtenu lorsque les moyens d'amortissement MA comprennent un amortisseur CA et PIA et un mécanisme à excentrique ME, comme illustré non limitativement sur la figure 1.

Le cylindre CA peut, par exemple, être similaire (ou identique) à celui décrit ci-avant en référence à la figure 3. Le piston PIA est destiné à être solidarisé à la partie intermédiaire PI de la pédale d'accélérateur PA et propre à se translater dans le cylindre CA.

Le mécanisme à excentrique ME est solidarisé fixement au cylindre CA, par exemple sur une paroi fixe (éventuellement la même que celle à laquelle est solidarisée la pédale d'accélérateur PA). Il est propre à faire varier les valeurs minimale pₘᵢₙ et maximale pₘₐₓ en fonction de la vitesse en cours du véhicule, grâce à une consigne venant d'un calculateur du véhicule, comme par exemple le calculateur gérant le fonctionnement du moteur. Faire varier les positions pₘᵢₙ et pₘₐₓ permet que le conducteur dispose, pour de faibles vitesses (par exemple lors d'une phase de décollage après un stop), de la plus grande partie de la course de la pédale d'accélérateur PA pour doser le couple qu'il veut voir transmis aux roues. Ainsi, l'intervalle définissant la zone Z peut, par exemple, être placé au tout début de la course de la pédale d'accélérateur PA pour de faibles vitesses.

L'invention s'avère avantageuse tant pour les véhicules classiques que pour les véhicules hybrides. En effet, dans le cas d'un véhicule classique, elle permet de réduire sensiblement la consommation de carburant dans les phases de roue libre, et dans le cas d'un véhicule hybride elle permet en outre de ne pas utiliser de système de freinage piloté couteux (une récupération d'énergie très importante peut être réalisée lorsqu'on relâche la pédale d'accélérateur et lorsque l'on actionne la pédale de frein le système de récupération est déjà à son potentiel maximal).

## Revendications

1. Dispositif (D) de commande de l'accélération d'un véhicule, ledit dispositif (D) comprenant une pédale d'accélérateur (PA) destinée à être montée à rotation dans ledit véhicule, et comprenant en outre des moyens d'amortissement (MA), d'une part, solidarisés à une partie intermédiaire (PI) de ladite pédale d'accélérateur (PA) et, d'autre part, agencés pour présenter un coefficient de raideur plus important dans une zone correspondant à des positions angulaires intermédiaires de ladite pédale d'accélérateur (PA) appartenant à un intervalle ayant un écart prédéfini entre ses valeurs minimale et maximale, de sorte qu'un conducteur ressente avec le pied qui actionne ladite pédale d'accélérateur (PA) quand cette dernière (PA) est dans ladite zone, ledit dispositif étant **caractérisé en ce que** lesdits moyens d'amortissement sont destinés à être solidarisés audit véhicule.

2. Dispositif selon la revendication 1, **caractérisé en ce que** lesdits moyens d'amortissement (MA) sont agencés pour présenter dans ladite zone un coefficient de raideur qui varie en fonction d'une vitesse d'enfoncement de ladite pédale d'accélérateur (PA) ou de relâchement d'une pression exercée sur ladite pédale d'accélérateur (PA).

3. Dispositif selon la revendication 2, **caractérisé en ce que** ledit coefficient de raideur augmente avec ladite vitesse.

4. Dispositif selon l'une des revendications 2 et 3, **caractérisé en ce que** lesdits moyens d'amortissement (MA) comprennent i) un cylindre (CA) comprenant des chambres amont (CH1) et aval (CH2) présentant des première et deuxième sections, et une chambre intermédiaire (CH3) reliant lesdites chambres amont (CH1) et aval (CH2) et présentant une troisième section strictement inférieure auxdites première et deuxième sections, et ii) un piston (PIA) solidarisé à ladite partie intermédiaire (PI) de la pédale d'accélérateur (PA) et propre à se translater dans lesdites chambres amont (CH1), aval (CH2) et intermédiaire (CH3).

5. Dispositif selon l'une des revendications 1 à 4, **caractérisé en ce que** lesdits moyens d'amortissement (MA) sont agencés pour présenter dans ladite zone un coefficient de raideur qui varie selon que ledit pied enfonce ladite pédale d'accélérateur (PA) ou relâche une pression exercée sur ladite pédale d'accélérateur (PA).

6. Dispositif selon la revendication 5, **caractérisé en ce que** lesdits moyens d'amortissement (MA) comprennent un cylindre (CA) et un piston (PIA) solidarisé à ladite partie intermédiaire (PI) de la pédale d'accélérateur (PA), propre à se translater dans ledit cylindre (CA) et comprenant des moyens d'action (MAC) propres à induire un premier coefficient de raideur lorsque ledit pied enfonce ladite pédale d'accélérateur (PA) et un second coefficient de raideur inférieur audit premier coefficient de raideur lorsque ledit pied relâche la pression exercée sur ladite pédale d'accélérateur (PA).

7. Dispositif selon l'une des revendications 1 à 6, **caractérisé en ce que** lesdits moyens d'amortissement (MA) sont agencés pour faire varier lesdites valeurs minimale et maximale de l'intervalle en fonction d'une vitesse en cours dudit véhicule.

8. Dispositif selon la revendication 7, **caractérisé en ce que** lesdits moyens d'amortissement (MA) comprennent, d'une part, un cylindre (CA) et un piston (PIA) solidarisé à ladite partie intermédiaire (PI) de la pédale d'accélérateur (PA) et propre à se translater dans ledit cylindre (CA), et, d'autre part, un mécanisme à excentrique (ME) solidarisé fixement audit cylindre (CA), destiné à être solidarisé audit véhicule, et propre à faire varier lesdites valeurs minimale et maximale de l'intervalle en fonction de ladite vitesse en cours du véhicule.

9. Véhicule, **caractérisé en ce qu'**il comprend un dispositif de commande (D) selon l'une des revendications précédentes.

10. Véhicule selon la revendication 9, **caractérisé en ce qu'**il est de type automobile.

## Patentansprüche

1. Vorrichtung (D) zum Steuern der Beschleunigung eines Fahrzeugs, wobei die Vorrichtung (D) ein Gaspedal (PA) umfasst, das dazu bestimmt ist, in Drehung in dem Fahrzeug installiert zu sein, und außerdem Dämpfungsmittel (MA) umfasst, die einerseits mit einem Zwischenteil (PI) des Gaspedals (PA) fest verbunden sind und andererseits eingerichtet sind, um einen Steifigkeitskoeffizienten aufzuweisen, der in einer Zone, die Zwischenwinkelpositionen des Gaspedals (PA) entspricht, die einem Intervall angehören, das einen vorbestimmten Abstand zwischen seinem Mindest- und Höchstwert hat, größer ist, so dass ein Fahrer mit dem Fuß, der das Gaspedal (PA) betätigt, spürt, wenn dieses Letztere (PA) in der Zone ist, Vorrichtung **dadurch gekennzeichnet, dass** die Dämpfungsmittel dazu bestimmt sind, fest mit dem Fahrzeug verbunden zu sein.

2. Vorrichtung nach Anspruch 1, **dadurch gekennzeichnet, dass** die Dämpfungsmittel (MA) eingerichtet sind, um in der Zone einen Steifigkeitskoeffizienten aufzuweisen, der in Abhängigkeit von einer Geschwindigkeit des Hineindrückens des Gaspedals (PA) oder des Freigebens eines Drucks, der auf das Gaspedal (PA) ausgeübt wird, variiert.

3. Vorrichtung nach Anspruch 2, **dadurch gekennzeichnet, dass** der Steifigkeitskoeffizient mit der Geschwindigkeit zunimmt.

4. Vorrichtung nach einem der Ansprüche 2 und 3, **dadurch gekennzeichnet, dass** die Dämpfungsmittel (MA) i) einen Zylinder (CA) umfassen, der eine stromaufwärtige Kammer (CH1) und eine stromabwärtige Kammer (CH2), die erste und zweite Abschnitte aufweisen, und eine Zwischenkammer (CH3), die die stromaufwärtige Kammer (CH1) und die stromabwärtige Kammer (CH2) verbindet, umfassen, und einen dritten Abschnitt, der strikt unter dem ersten und dem zweiten Abschnitt liegt, aufweisen, und ii) einen Kolben (PIA), der mit dem Zwischenteil (PI) des Gaspedals (PA) fest verbunden und geeignet ist, sich in der stromaufwärtigen Kammer (CH1), der stromabwärtigen Kammer (CH2) und der Zwischenkammer (CH3) zu verschieben.

5. Vorrichtung nach einem der Ansprüche 1 bis 4, **dadurch gekennzeichnet, dass** die Dämpfungsmittel (MA) eingerichtet sind, um in der Zone einen Steifigkeitskoeffizienten aufzuweisen, der je nachdem variiert, ob der Fuß das Gaspedal (PA) hineindrückt oder einen Druck, der auf das Gaspedal (PA) ausgeübt wird, freigibt.

6. Vorrichtung nach Anspruch 5, **dadurch gekennzeichnet, dass** die Dämpfungsmittel (MA) einen Zylinder (CA) und einen Kolben (PIA), der mit dem Zwischenteil (PI) des Gaspedals (PA) fest verbunden ist, umfassen, der geeignet ist, sich in dem Zylinder (CA) zu verschieben und Betätigungsmittel (MAC) umfasst, die geeignet sind, um einen ersten Steifigkeitskoeffizienten zu induzieren, wenn der Fuß das Gaspedal (PA) hineindrückt, und einen zweiten Steifigkeitskoeffizienten, der niedriger ist als der erste Steifigkeitskoeffizient, wenn der Fuß den Druck, der auf das Gaspedal (PA) ausgeübt wird, freigibt.

7. Vorrichtung nach einem der Ansprüche 1 bis 6, **dadurch gekennzeichnet, dass** die Dämpfungsmittel (MA) eingerichtet sind, um den Mindest- und Höchstwert des Intervalls in Abhängigkeit von einer aktuellen Geschwindigkeit des Fahrzeugs variieren zu lassen.

8. Vorrichtung nach Anspruch 7, **dadurch gekennzeichnet, dass** die Dämpfungsmittel (MA) einerseits einen Zylinder (CA) und einen Kolben (PIA), der fest mit dem Zwischenteil (PI) des Gaspedals (PA) verbunden und geeignet ist, sich in dem Zylinder (CA) zu verschieben, aufweisen, und, andererseits, einen Exzentermechanismus (ME), der fest mit dem Zylinder (CA) verbunden ist, der dazu bestimmt ist, fest mit dem Fahrzeug verbunden zu sein, und geeignet ist, um den Mindest- und den Höchstwert des Intervalls in Abhängigkeit von der aktuellen Geschwindigkeit des Fahrzeugs variieren zu lassen.

9. Fahrzeug, **dadurch gekennzeichnet, dass** es eine Steuervorrichtung (D) nach einem der vorhergehenden Ansprüche umfasst.

10. Fahrzeug nach Anspruch 9, **dadurch gekennzeichnet, dass** es ein Kraftfahrzeug ist.

## Claims

1. A device (D) for controlling the acceleration of a vehicle, said device (D) including an accelerator pedal (PA) intended to be rotatably mounted in said vehicle, and furthermore including damping means (MA), on the one hand, secured to an intermediate part (PI) of said accelerator pedal (PA) and, on the other hand, arranged to present a greater rigidity coefficient in a zone corresponding to intermediate angular positions of said accelerator pedal(PA) belonging to an interval having a predefined gap between its minimum and maximum values, such that a driver senses with the foot which actuates said accelerator pedal (PA) when this latter (PA) is in said zone, said device being **characterized in that** said damping means are intended to be secured to said vehicle.

2. The device according to Claim 1, **characterized in that** said damping means (MA) are arranged to present in said zone a rigidity coefficient which varies as a function of a speed of depression of said accelerator pedal (PA) or of release of a pressure exerted on said accelerator pedal (PA).

3. The device according to Claim 2, **characterized in that** said rigidity coefficient increases with said speed.

4. The device according to one of Claims 2 and 3, **characterized in that** said damping means (MA) include i) a cylinder (CA) including upstream (CH1) and downstream (CH2) chambers presenting first and second sections, and an intermediate chamber (CH3) connecting said upstream (CH1) and downstream (CH2) chambers and presenting a third section strictly lower than said first and second sections, and ii) a piston (PIA) secured to said intermediate part (PI) of the accelerator pedal (PA) and suitable to translate in said upstream (CH1), downstream (CH2) and intermediate (CH3) chambers.

5. The device according to one of Claims 1 to 4, **characterized in that** said damping means (MA) are arranged to present in said zone a rigidity coefficient which varies according to whether said foot depresses said accelerator pedal (PA) or releases a pressure exerted on said accelerator pedal (PA).

6. The device according to Claim 5, **characterized in that** said damping means (MA) include a cylinder (CA) and a piston (PIA) secured to said intermediate part (PI) of the accelerator pedal (PA), suitable to translate in said cylinder (CA) and including action means (MAC) suited to induce a first rigidity coefficient when said foot depresses said accelerator pedal (PA) and a second rigidity coefficient, lower than said first rigidity coefficient, when said foot releases the pressure exerted on said accelerator pedal (PA).

7. The device according to one of Claims 1 to 6, **characterized in that** said damping means (MA) are arranged to vary said minimum and maximum values of the interval as a function of a current speed of said vehicle.

8. The device according to Claim 7, **characterized in that** said damping means (MA) include, on the one hand, a cylinder (CA) and a piston (PIA) secured to said intermediate part (PI) of the accelerator pedal (PA) and suitable to translate in said cylinder (CA), and, on the other hand, an eccentric mechanism (ME) fixedly secured to said cylinder (CA), intended to be secured to said vehicle, and suitable to vary said minimum and maximum values of the interval as a function of said current speed of the vehicle.

9. A vehicle, **characterized in that** it includes a controlling device (D) according to one of the preceding claims.

10. The vehicle according to Claim 9, **characterized in that** it is of the automobile type.
